# EUROPÄISCHE PATENTSCHRIFT

(11) **EP 2 092 311 B1**
(45) Veröffentlichungstag und Bekanntmachung des Hinweises auf die Patenterteilung: **05.01.2011**
(21) Anmeldenummer: 07819646.6
(22) Anmeldetag: 07.11.2007
(51) Int. Cl.: G01N 21/90, B07C 5/342

(54) **VORRICHTUNG ZUR INSPEKTION VON FLASCHEN ODER DERGLEICHEN BEHÄLTERN**
DEVICE FOR THE INSPECTION OF BOTTLES OR SIMILAR CONTAINERS
DISPOSITIF D'INSPECTION DE BOUTEILLES OU RECIPIENTS ANALOGUES

(30) Priorität: 15.11.2006 DE 102006054099
(43) Veröffentlichungstag der Anmeldung: 26.08.2009
(73) Patentinhaber: KHS GmbH, Juchostrasse 20 44143 Dortmund (DE)
(72) Erfinder: TILL, Volker, 65719 Hofheim am Taunus (DE); KAHLISCH, Paul-Gerhard, 58730 Fröndenberg (DE); BÖCKER, Horst, 58239 Schwerte (DE)
(86) Internationale Anmeldenummer: PCT/EP2007/009633
(87) Internationale Veröffentlichungsnummer: WO 2008/058658

(56) Entgegenhaltungen:
- EP-A- 1 493 690
- EP-A- 1 700 643
- WO-A-01/44791
- WO-A-96/18883
- FR-A- 2 746 502
- US-A- 3 557 950
- US-A- 4 136 930
- US-A- 4 209 802
- US-A- 4 605 851
- US-A- 4 801 319
- US-A- 5 492 216
- US-A- 5 917 602
- US-A- 5 926 268
- US-A1- 2005 263 443

## Beschreibung

Die Erfindung bezieht sich auf eine Vorrichtung gemäß Oberbegriff Patentanspruch 1.

In der Technik stellt sich immer wieder die Aufgabe, mit Flüssigkeiten gefüllte Behälter auf Fremdkörper zu untersuchen.

Von besonderem Vorteil sind dabei Inspektionsvorrichtungen, welche die Lage der Behälter während der Inspektion zumindest einmalig ändern, da durch diese Lageänderung des Behälters auch eine Lageänderung eventuell enthaltener Fremdkörper bewirkt wird, wodurch diese Fremdkörper bei Anwendung von Systemen zur elektronischen Bildverarbeitung besonders leicht erkennbar werden.

Eine dazu geeignete Vorrichtung wurde beispielsweise durch die US 5,492,216 vorgestellt. Diese Schrift sieht zur Lageänderung der Behälter vor, diese um einen bestimmten Winkelbetrag zu einer Selte zu neigen. Nachteilig an dieser Vorgehensweise ist, dass die vorgesehene, nur geringe Lageänderung der Behälter nicht in allen Fällen ausreicht, um eventuell vorhandene Fremdkörper in jedem Fall sicher zu einer wahrnehmbaren bzw. detektierbaren Lageänderung zu veranlassen.

Aufgabe der Erfindung ist es, eine Vorrichtung aufzuzeigen, welche eine zuverlässige Überprüfung von mit einer Flüssigkeit oder einem flüssigen Füllgut gefüllten Behältern (auch Vollflaschen oder Vollbehälter) auf eventuell vorhandene Fest- oder Fremdkörper mit hoher Leistung (überprüfte Behälter je Zeiteinheit) ermöglicht. Zur Lösung dieser Aufgabe ist eine Vorrichtung entsprechend dem Patentanspruch 1 ausgebildet.

Die Überprüfung der Behälter kann durch Bilderfassung und Bildauswertung bzw. -analyse erfolgen, und zwar in der Form, dass von jedem Behälter in einer Referenzlage oder -orientierung des Behälters ein Referenzbild erzeugt und dieses Referenzbild dann mit wenigstens einem weiteren Bild, auch Vergleichs- oder Überwachungsbild verglichen wird, welches von dem selben Behälter in einer von der Referenzorientierung abweichenden Lage oder Orientierung im Raum erzeugt wurde, wobei die Bildebene des dabei abgebildeten Behälterbereichs in den verarbeiteten oder verglichenen Bilder (Referenzbild und des wenigstens einen weiteren Bildes von dem jeweiligen Behälter) oder in hievon abgeleiteten Bildern identisch oder im Wesentlichen identisch ist. Im einfachsten Fall wird die abweichende Behälterorientierung im Raum bei der Bilderfassung unter Beibehaltung jeweils der selben Bildebene beispielsweise dadurch erreicht, dass der betreffende Behälter aus seiner Referenzorientierung um eine Achse geschwenkt wird, die parallel oder im Wesentlichen parallel sowohl zur optischen Achse des das Referenzbild erzeugenden optoelektrischen Sensors, als auch parallel oder im Wesentlichen zur optischen Achse des das wenigstens eine Überwachungsbild erzeugenden optoelektrischen Sensors ist.

Die von den optoelektrischen Sensoren erfassten und/oder bei der Bildverarbeitung verwendeten Bildbereiche des jeweiligen Behälters sind dabei vorzugsweise identisch oder praktisch identisch, sodass bei der Auswertung des Referenzbildes und des wenigstens einen Überwachungsbildes Fehlstellen des jeweiligen Behälters selbst, wie z.B. Blasen und/oder Einschlüsse in der Behälterwandung, Gussnähte, Kerben, Kratzer usw. als für die Überwachung unerhebliche Bildbestandteile eliminiert werden bzw. bei der Auswertung der Bilder unberücksichtigt bleiben.

Weiterbildungen der Erfindung sind Gegenstand der Unteransprüche. Die Erfindung wird im Folgenden anhand der Figuren an einem Ausführungsbeispiel näher erläutert. Es zeigen:

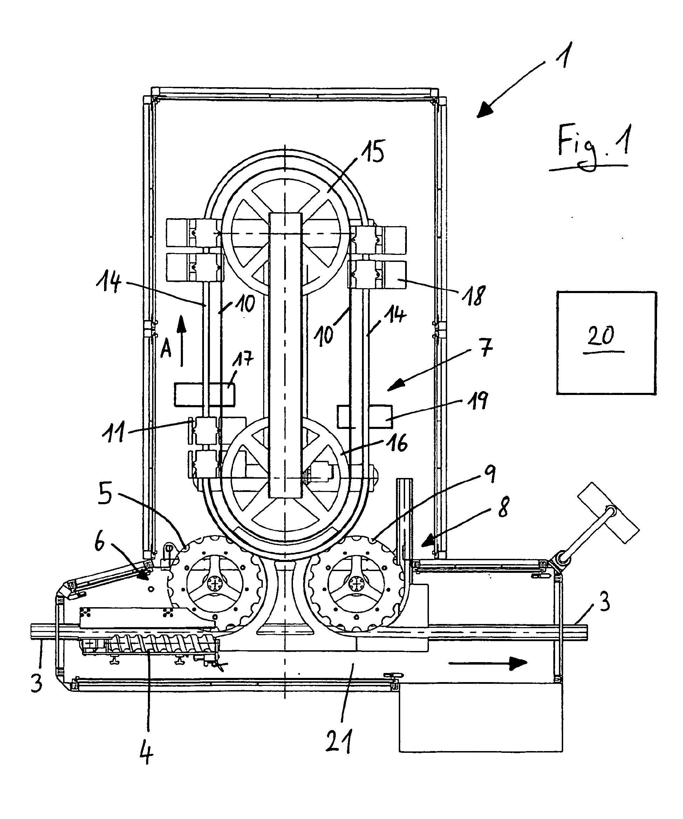

- Fig. 1: in schematischer Darstellung eine Inspektionsvorrichtung in Draufsicht;
- Fig. 2: in Einzeldarstellung eines der Transportelemente bzw. einen Schlitten des Transportsystems der Inspektionsvorrichtung der Figur 1, zusammen mit ei- ner Flasche;
- Fig. 3: unterschiedliche Verfahrensschritte des erfindungsgemäßen Verfahrens zur Inspektion von Flaschen oder dergleichen, aus einem transparenten Material hergestellten Behälter.
In den Figuren ist 1 eine Inspektionsvorrichtung (Vollflascheninspektor) zur Inspektion Flaschen 2, die aus einem transparenten Material, beispielsweise aus Glas oder einem transparenten Kunststoff, z.B. PET gefertigt und mit einem transparenten Füllgut (z. B. Bier, Tafel- oder Mineralwasser, Wein usw.) gefüllt sind. Die Überprüfung bzw. Inspektion der Flaschen 2 erfolgt auf eventuell im Füllgut vorhandene Fest- oder Fremdkörper, und zwar optisch durch Bilderfassung und Bildverarbeitung oder -analyse mit einem entsprechenden bilderfassenden und bildverarbeitenden System unter Verwendung von optoelektrischen Sensoren.

Die zu überprüfenden Flaschen 2 werden der Inspektionsvorrichtung 1 aufrecht stehend, d.h. mit ihrer Flaschenachse in vertikaler Richtung orientiert über einen äußeren von einem Transportband 3 gebildeten Transporteur zugeführt.
Dabei gelangen die zu überprüfenden Flaschen 2 über einen von einer Einteilschnecke 4 und einem Einlaufstern 5 gebildeten Flascheneinlauf 6 an ein Transportsystem 7 der Inspektionsvorrichtung 1, mit welchem die Flaschen 2 auf einer Inspektionsstrecke dieser Vorrichtung bewegt werden. Nach der Inspektion werden die Flaschen 2 über einen, einen Flaschenauslauf 8 bildenden Transportstern 9 wieder an das Transportband 3 übergeben, auf welchem die Flaschen 2 aufrecht stehend abtransportiert werden. Solche Flaschen 2, in denen bei der Inspektion Fremdkörper festgestellt wurden, werden auf dem Transportband 3 in geeigneter Weise ausgeschleust.

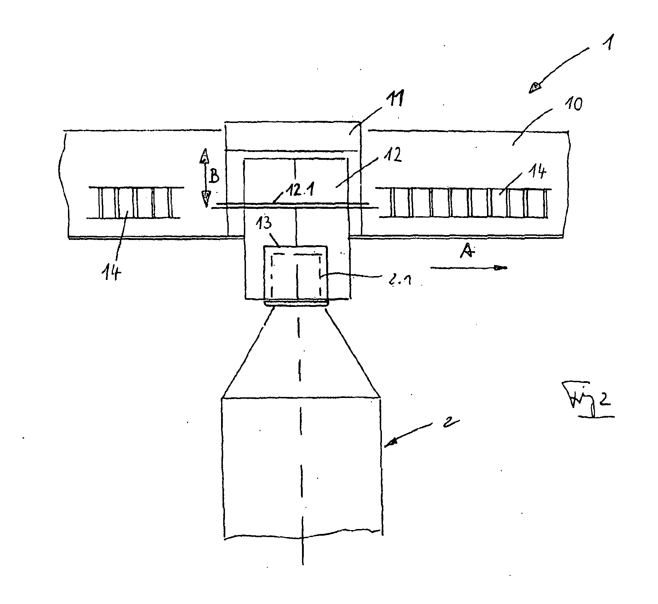

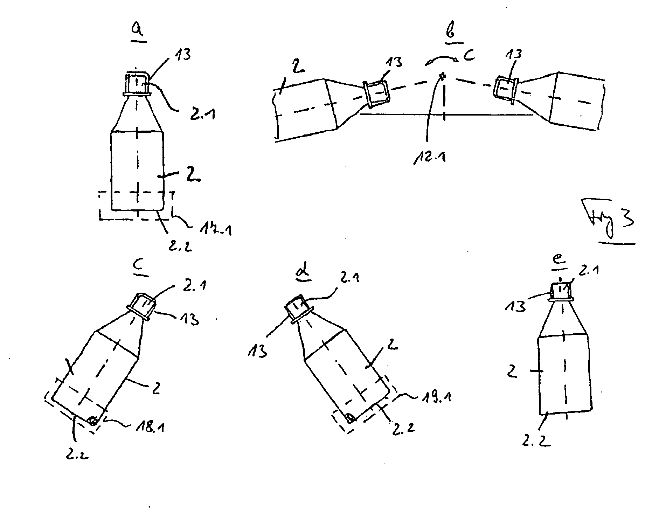

Das Transportsystem 7 besteht bei der dargestellten Ausführungsform aus einer horizontalen und in Draufsicht ovalen Führung 10, an der in gleichmäßigen Abständen mehrere, entlang der Führung 10 in einer Transportrichtung A bewegliche Schlitten 11 vorgesehen sind. Jeder Schlitten 11 weist einen Greifer 12 zum Greifen oder Fassen jeweils einer Flasche 2 im Bereich ihrer mit einem Verschluss 13 verschlossenen Flaschenmündung 2.1 auf, sodass jede am Flascheneinlauf 6 von einem Greifer 12 gefasste Flasche an diesem Greifer hängend mit dem Transportsystem 7 entlang der Inspektionsstrecke bewegt wird. Jeder Greifer 12 ist z. B. durch entsprechende Steuerkurven für das Aufnehmen und Absetzen der Flaschen 2 um einen Hub anhebbar und absenkbar, wie dies in der Figur 2 mit dem Doppelpfeil B angedeutet ist, sowie zugleich auch um eine horizontale Achse 12.1, und zwar bei der dargestellten Ausführungsform um eine horizontale Achse parallel zur Transportrichtung A schwenkbar, wie dies in der Figur 3 auch mit dem Doppelpfeil C angedeutet ist.

Zum Bewegen der Schlitten 11 und der an diesen vorgesehenen Greifern 12 entlang der von der Führung 10 gebildeten, geschlossenen ovalen Bewegungsbahn sind sämtliche Schlitten 11 mit einem gemeinsamen flexiblen Element, beispielsweise einem Zahnriemen 14 verbunden, der als geschlossene, parallel zur Führung 10 verlaufende und in einer horizontalen Ebene angeordnete Schlaufe über zwei Zahnriemenräder 15 und 16 geführt ist, von denen ein Zahnriemenrad, nämlich beispielsweise das Zahnriemenrad 16 synchron mit dem Transportstern 5 und 9 angetrieben ist, sodass die Schlitten 11 entlang der Führung 10 in der Transportrichtung A bewegt werden und auch eine störungsfreie Übergabe jeder Flasche 2 von dem Transportstern 5 an einen Greifer 12 sowie von einem Greifer 12 an den Transportstern 9 sichergestellt ist.

Im Bereich des Umlenk- oder Zahnriemenrades 16 für den innerhalb der Führung 10 verlaufenden Zahnriemen 14 sind der Flascheneinlauf 6 und der Flaschenauslauf 8 vorgesehen, sodass der größere Teil der Transportstrecke des Transportsystems 7 als Inspektionsstrecke zur Verfügung steht.

An der von dem Transportsystem 7 gebildeten Transport- oder Inspektionsstrecke sind bei der dargestellten Ausführungsform drei optoelektrische Sensoren in Form jeweils einer Kamera 17, 18 und 19 vorgesehen, die Bestandteil eines Bilderfassungs- und Bearbeitungs- oder Analysesystems sind, welches zusätzlich zu den Kameras 17 - 19 auch eine rechnergestützte oder von einem Rechner gebildete Elektronik 20 zur Bildverarbeitung und/oder -analyse aufweist.

Die wesentlichen Verfahrensschritte des mit der Inspektionsvorrichtung 1 durchgeführten Inspektionsverfahrens sind in den Positionen a - e der Figur 3 dargestellt. Die über das Transportband 3 bzw. den äußeren Transporteur zugeführten Flaschen 2 werden jeweils am Behältereinlauf 6 von einem Greifer 12 erfasst und mit ihrer Flaschenachse weiterhin in vertikaler Richtung orientiert an der ersten Kamera 17 vorbeibewegt, mit der ein erstes Bild oder Referenzbild von der jeweiligen Flasche 2 erzeugt wird (Position a der Figur 3). Die Kamera 17 ist dabei so eingestellt bzw. orientiert, dass sie einen erfahrungsgemäß hinsichtlich eventuell vorhandener Fremdkörper sehr kritischen Bildbereich 17.1 der jeweiligen Flasche 2 erfasst, d.h. einem Bildbereich 17.1, der insbesondere auch den dem Verschluss 13 gegenüberliegenden Flaschenboden 2.2 mit einschließt, an welchem sich erfahrungsgemäß Fest- oder Fremdkörper, soweit sie in einer Flasche 2 vorhanden sind, in erster Linie ablagern. Beim Weiterbewegen der jeweiligen Flasche 2 mit dem Transportsystem 7 erfolgt dann beispielsweise ein "Schütteln" durch mehrmaliges Schwenken des Greifers 12 und damit auch der Flasche 2 um die Greiferschwenkachse 12.1, und zwar aus der vertikalen Orientierung in einem Winkel beispielsweise bis zu 80° oder größer (z. B. bis 100°) nach links und nach rechts, um so eventuell in der jeweiligen Falsche 2 enthaltene und an der Innenfläche der Flasche 2 haftende Fremdkörper zu lockern (Position b der Figur 3).

Im Anschluss daran wird die jeweilige Flasche in eine Schrägstellung geschwenkt, sodass die Flaschenachse mit der Vertikalen einen Winkel kleiner als 90° einschließt, der sich nach unten hin öffnet, die Flasche mit ihrem Boden 2.2 schräg nach unten weist (Position c der Figur 3). In dieser Lage, in der sich Fest- oder Fremdkörper soweit vorhanden, in der zwischen dem Flaschenboden und der Umfangswand der Falsche 2 gebildeten Winkelbereich absenken oder anlagern, wird jede Flasche 2 zur Erzeugung eines weiteren Bildes oder eines ersten Überwachungsbildes an der Kamera 18 vorbeibewegt. Die Kamera 18 ist so eingestellt, dass sie von der jeweiligen Flasche 2 einen Bildbereich 18.1 erfasst, der identisch mit dem Bildbereich 17.1 ist. Wegen der geschwenkten Lage der an der Kamera 18 vorbeibewegten Flaschen 2 ist dann auch der Bildbereich 18.1 entsprechend gedreht, im Bezug auf die jeweilige Flasche bzw. deren Achse, aber identisch mit dem Bildbereich 17.1. Die Drehung des Bildbereichs 18.1 wird beispielsweise bei der Bildverarbeitung softwaremäßig kompensiert.

Im Anschluss daran wird die jeweilige Flasche 2 in eine der Schrägstellung der Position c entgegengesetzte Schrägstellung geschwenkt, sodass die Flaschenachse mit der Vertikalen wiederum einen Winkel kleiner als 90° einschließt, der sich nach unten hin öffnet, die Flasche mit ihrem Boden 2.2 schräg nach unten weist (Position d der Figur 3). In dieser Lage wird jede Flasche 2 zur Erzeugung eines weiteren Bildes bzw. eines zweiten Überwachungsbildes an der Kamera 19 vorbeibewegt. Die Kamera 19 ist ebenfalls so eingestellt, dass sie von der jeweiligen Flasche 2 einen Bildbereich 19.1 erfasst, der wiederum identisch mit dem Bildbereich 17.1 ist. Wegen der geschwenkten Lage der an der Kamera 19 vorbeibewegten Flaschen 2 ist dann auch der Bildbereich 19.1 entsprechend gedreht, im Bezug auf die jeweilige Flasche bzw. deren Achse aber identisch mit dem Bildbereich 17.1, so dass für die Auswertung Bilder von identischen Bildbereichen 17.1, 18.1 und 19.1.

Aus dem Vergleich der von den Kameras 17, 18 und 19 erzeugten Bilder erfolgt in der Elektronik 20 die Analyse jeder Flasche 2 im Bezug auf eventuell in der Flasche vorhandene Fest- oder Fremdkörper. Dem auf dem Bildvergleich beruhenden Analyseverfahren liegt die Erkenntnis zugrunde, dass in einer Flasche 2 vorhandene Fremdkörper insbesondere auch nach dem Schwenken oder Schütteln (Position b der Figur 3) zumindest zum Teil in dem zweiten und/oder dritten von der Kamera 18 bzw. 19 erzeugten Bild eine andere Lage aufweisen als in dem von der Kamera 17 oder 18 erzeugten Bild, während hingegen Fehlstellen in der jeweiligen Flasche 2, z.B. Blasen, Einschlüsse, Kratzer, Gussnähte usw. in oder an der Flaschenwandung in den Bildern der Kameras 17 - 19 in Form und Lage praktisch identisch sind und somit als für die Inspektion bzw. das Überwachungsergebnis unwichtige Merkmale bei der Bildverarbeitung oder -analyse unberücksichtigt bleiben. Wesentlich hierfür ist bei dieser Ausführungsform der Erfindung, dass die jeweilige Flasche 2 für die beiden Überwachungsbilder lediglich um eine einzige Achse geschwenkt wird, die die optische Achse der Kameras 17 - 19 ist oder parallel zu deren optischen Achsen orientiert ist und beispielsweise senkrecht oder radial zur Flaschenachse verläuft.

Nach dem Passieren der Kamera 19 wird jede Flasche 2 wiederum in ihre vertikale Lage zurückgeschwenkt (Position e der Figur 3) und über den Flaschenauslauf 8 an den äußeren Transporteur bzw. das äußere Transportband 3 übergeben.

Die Bildbereiche 17.1, 18.1 und 19.1 sind dabei beispielsweise so gewählt, dass sie radial zur Flaschenachse jeweils den gesamten Flaschendurchmesser und in Richtung der Flaschenachse einen Bereich von etwa 30 - 35 mm über dem Flaschenboden 2.2 erfassen. Um eine hohe Qualität bei der Inspektion zu erreichen, sind die Kameras 17, 18 und 19 so gewählt, dass sie eine Kamera- oder Bildauflösung von wenigstens 0,15mm pro Pixel oder höher aufweisen, sodass Fest- oder Fremdkörper mit einer Größe von 0,5 x 0,5 x 0,5 mm in transparenten, in den Flaschen 2 enthaltenen Flüssigkeiten ohne weiteres erfasst werden können und die Fehlerrate bei der Inspektion bei maximal nur 0,5 - 1 % liegt.

Die Bildauswertung kann dann beispielsweise so erfolgen, dass Fremdkörper nur dann als vorhanden festgestellt werden, wenn die Auswertung des Bildes der Kamera 18 und der Kamera 19 Fremdkörper zeigen (UND-Funktion), oder aber wenn bereits das Bild der Kamera 18 oder der Kamera 19 Fremdkörper zeigt (ODER-Funktion).

Weitere Besonderheiten der Inspektionsvorrichtung 1 sind z.B., dass die Schlitten 11 mit Rollen an der Führung 10 geführt sind und dass die Schlittenführung 10 selbstreinigend, trockenlaufend, schmierfrei und schmutzunempfindlich ausgeführt ist, insbesondere auch in der Weise, dass vom System und/oder von eventuell platzenden Flaschen 2 verursachte Verschmutzungen nicht in die Führung gelangen können. Durch das Schwenken der Greifer 12 um Achsen 12.1 parallel zur Transportrichtung A ist gewährleistet, dass selbst bei einer sehr dichten Folge der Schlitten 11 in Transportrichtung A ein Schwenken der Greifer 12 möglich ist. Die Kameras 17, 18 und 19 sind jeweils in Draufsicht auf die Inspektionsvorrichtung 1 seitlich gegenüber der Schlittenführung 10 versetzt vorgesehen, und zwar beispielsweise die Kameras 17 und 19 außerhalb der von der Schlittenführung 10 gebildeten Schlaufe und die Kamera 18 innerhalb dieser Schlaufe. Jeder Kamera 17, 18, 19 ist jeweils eine geeignete Beleuchtungseinrichtung zugeordnet.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, in Abänderung des vorbeschriebenen Verfahrensablaufs auf das Schütteln bzw. Schwenken der Flaschen 2 entsprechend der Position b der Figur 3 zu verzichten und/oder anstelle von drei Kameras nur zwei Kameras vorzusehen, beispielsweise nur die Kameras 17 und 19, von denen die Kamera 17 wieder zur Erzeugung des Referenzbildes und die Kamera 19 zur eigentlichen Erfassung von Fremdstoffen oder Fremdkörpern in den gefüllten Flaschen 2 dient, d.h. zur Erzeugung des Überwachungsbildes.

Vorstehend wurde die Erfindung dahingehend beschrieben, dass ausschließlich transparente, mit transparenten Füllgütern gefüllte Behälter mit der vorgestellten Erfindung inspiziert werden sollen. Die vorliegende Erfindung ist aber nicht auf derartige Anwendungsfälle beschränkt. Vielmehr fallen auch die Inspektion von nicht transparenten oder durchscheinenden Behältern und/oder die Inspektion von nicht transparenten oder durchscheinenden Flüssigkeiten in den Schutzbereich der vorliegenden Erfindung.
Da bei derartigen Anwendungen die zuvor erwähnten, auf optischem Wege arbeitenden Inspektionsvorrichtungen nicht zu aussagekräftigen Ergebnissen führen, sind erfindungsgemäß Verfahren vorgesehen, welche in der Lage sind, die nicht transparenten oder nicht durchscheinenden Elemente bildgebend zu durchdringen. Bei diesen Verfahren, kann es sich beispielsweise um solche handeln, welche mit Sendern für Strahlung im Bereich der Infrarotstrahlung, oder aber auch der Röntgenstrahlung arbeiten. Als Empfangselemente, welche letztlich zur Erzeugung eines in gewünschter Weise auswertbaren Abbildes des zu inspizierenden Gegenstandes dienen, sind beispielsweise Flächenmatrixsensoren für elektromagnetische Strahlung vorgesehen.

Eine Besonderheit der Inspektionsvorrichtung 1 besteht auch noch darin, dass der den Flascheneinlauf 6 und dem Flaschenauslauf 8 bildende und die entsprechenden Elemente aufweisende Vortisch 21 der Inspektionsvorrichtung 1 so ausgebildet ist, dass die Einteilschnecke 4 und die beiden Transportsterne 5 und 9 entnommen und/oder umgangen werden können, sodass die Flaschen 2 auf dem Transportband 3 bzw. auf dem von diesem Transportband gebildeten äußeren Transporteur an der Inspektionsvorrichtung 1 vorbeigeleitet werden können, also eine die Inspektionsvorrichtung 1 aufweisende Anlage praktisch ohne Umrüstzeiten auch ohne die Inspektionsvorrichtung 1 bzw. unter Umgehung der Inspektionsvorrichtung 1 betrieben werden kann.

Eine weitere Besonderheit der vorliegenden Erfindung besteht darin, dass eine Inspektionsvorrichtung ausgebildet wurde, bei welcher die Flaschen 2 an flexiblen Elementen, beispielsweise Zahnriemen 14 gehalten werden und mittels einer im Wesentlichen linearen Bewegung an den Inspektionsstationen vorbeigeführt werden. Durch diese Vorgehensweise kann die vorgestellte Inspektionsvorrichtung mit geringem baulichen Aufwand an die jeweiligen räumlichen Gegebenheiten angepasst werden. Ebenfalls kann die Behandlungsstrecke, und damit auch die Behandlungs- oder Inspektionszeit beliebig erweitert oder verkürzt werden. Zusätzlich können nahezu beliebig viele Behandlungs- oder Inspektionsstationen an der Behandlungsstrecke angeordnet werden.
Dabei ist ebenfalls vorgesehen, dass die Führung (10) des flexiblen Elementes zumindest auf Teilstrecken kurvenförmig und/oder kreisförmig und/oder bogenförmig und/oder geradlinig verläuft, um die Behandlungsstrecke schnell und preiswert an die gestellten Anforderungen anpassen zu können.

### Bezugszeichenliste

- 1: Inspektionsvorrichtung (Vollflascheninspektor)
- 2: Flasche
- 2.1: Flaschenmündung
- 2.2: Flaschenboden
- 3: äußerer Transporteur bzw. äußeres Transportband
- 4: Einteilschnecke
- 5: Transportstern
- 6: Flascheneinlauf
- 7: Transportsystem
- 8: Flaschenauslauf
- 9: Transportstern
- 10: Schlittenführung
- 11: Schlitten
- 12: Greifer
- 12.1: Schwenkachse des Greifers 12
- 13: Flaschenverschluss
- 14: Zahnriemen
- 15, 16: Zahnriemenrad
- 17, 18, 19: Kamera
- 17.1, 18.1, 19.1: Bildbereich
- 20: Elektronik
- 21: Vortisch

- A: Transportrichtung
- B: Hubrichtung
- C: Schwenken des jeweiligen Greifers 12

## Patentansprüche

1. Inspektionsvorrichtung für die Inspektion von Behältern (2), wobei die Behälter (2) von einer Haltevorrichtung aufgenommen und mittels einer Linearbewegung entlang einer Behandlungs- oder Inspektionsstrecke bewegt werden, wobei die Behälter (2) an mindestens einer Inspektionsstation entlang geführt werden, wobei innerhalb der Inspektionsvorrichtung ein flexibles Element vorgesehen ist, an welchem die Behälter (2) gehalten sind, und mittels welchem die Behälter(2) entlang der Behandlungsstrecke bewegt werden, **dadurch gekennzeichnet, dass** die Behälter (2) am Behältereinlauf (6) jeweils einzeln im Bereich ihrer, mit einem Verschluss (13) verschlossenen Behältermündung (2.1) von einem, an einem Schlitten (11) gehaltenen Greifer (12) gefasst oder gegriffen werden, sodass die Behälter an diesen Greifern (12) hängend transportiert werden, wobei die Schlitten zum Bewegen der Behälter mit dem flexiblen Element verbunden sind.

2. Inspektionsvorrichtung nach Anspruch 1, **dadurch gekennzeichnet, dass** das flexible Element ein Zahnriemen (14) ist.

3. Inspektionsvorrichtung nach Anspruch 1 oder 2, **dadurch gekennzeichnet, dass** das flexible Element an einer Führung (10) gehalten ist.

4. Inspektionsvorrichtung nach Anspruch 3, **dadurch gekennzeichnet, dass** die Führung (10) zumindest auf Teilstrecken kurvenförmig und/oder kreisförmig und/oder bogenförmig und/oder geradlinig verläuft.

5. Inspektionsvorrichtung nach einem der Ansprüche 1 bis 4, **dadurch gekennzeichnet, dass** mindestens eine Umlenkung für das flexible Element vorgesehen ist.

6. Inspektionsvorrichtung nach Anspruch 5, **dadurch gekennzeichnet, dass** die mindestens eine Umlenkung ein Zahnriemenrad ist.

## Claims

1. Inspection equipment for the inspection of containers (2), whereby the containers (2) are picked up by a handling device and moved along a processing or inspection line by means of a linear movement, whereby the containers (2) are guided to at least one inspection point, whereby there is a flexible element within the inspection equipment, on which the containers (2) are held and by means of which the containers (2) are moved along the inspection line, **characterized in that** at the inflow point (6) the containers (2) are captured or gripped singly by a gripper(12) that is held on a slide (11) in the area of their opening (2.1) and which are closed-up with a seal (13), so that the containers can be transported suspended on these grippers (12), whereby the slides for moving the containers are connected to the flexible element.

2. Inspection equipment as per Claim 1, **characterized in that** the flexible element is a toothed belt (14).

3. Inspection equipment as per Claim 1 or 2, **characterized in that** the flexible element is held on a guiding mechanism (10).

4. Inspection equipment as per Claim 3, **characterized in that** progression of the guiding mechanism (10) at least on some parts of the line is in a curved and/or circular and /or arched and/or straight line.

5. Inspection equipment as per one of the Claims 1 to 4, **characterized in that** there is at least one deflection specified for the flexible element.

6. Inspection equipment as per Claim 5, **characterized in that** at least one deflection has a toothed belt pulley.

## Revendications

1. Dispositif d'inspection pour l'inspection de récipients (2), dans lequel les récipients (2) sont pris en charge par un dispositif de maintien et déplacés au moyen d'un mouvement linéaire le long d'une voie de traitement et d'inspection, les récipients (2) passant le long d'au moins un poste d'inspection, un élément flexible étant prévu à l'intérieur du dispositif d'inspection, élément sur lequel les récipients (2) sont tenus et au moyen duquel les récipients (2) sont déplacés le long de la voie de traitement, **caractérisé en ce que** les récipients (2) sont saisis ou attrapés un seul à la fois à l'entrée des récipients (6), au niveau de leur ouverture de récipient (2.1) fermée par un bouchon (13), par un grappin (12) tenu sur un chariot (11), de sorte que les récipients sont transportés suspendus à ce grappin (12), les chariots étant reliés à l'élément flexible pour déplacer les récipients.

2. Dispositif d'inspection selon la revendication 1, **caractérisé en ce que** l'élément flexible est une courroie dentée (14).

3. Dispositif d'inspection selon la revendication 1 ou 2, **caractérisé en ce que** l'élément flexible est tenu sur un guidage (10).

4. Dispositif d'inspection selon la revendication 3, **caractérisé en ce que** le guidage (10) s'étend au moins par tronçons de manière incurvée et/ou circulaire et/ou cintrée et/ou rectiligne.

5. Dispositif d'inspection selon l'une des revendications 1 à 4, **caractérisé en ce qu'**au moins un renvoi est prévu pour l'élément flexible.

6. Dispositif d'inspection selon la revendication 5, **caractérisé en ce que** le renvoi au nombre d'au moins un est une roue dentée.
